(19) Europäisches Patentamt European Patent Office Office européen des brevets

(11) **EP 3 789 901 B1**

(12) **FASCICULE DE BREVET EUROPEEN**

(45) Date de publication et mention de la délivrance du brevet:
**30.10.2024 Bulletin 2024/44**

(21) Numéro de dépôt: **20195138.1**

(22) Date de dépôt: **08.09.2020**

(51) Classification Internationale des Brevets (IPC):
**G06F 21/64** *(2013.01)* **H04L 9/32** *(2006.01)*
**H04L 9/00** *(2022.01)*

(52) Classification Coopérative des Brevets (CPC):
**G06F 21/64; H04L 9/3236; H04L 9/50**

(54) **MÉTHODE D'AUTHENTIFICATION SÉLECTIVE D'UN UTILISATEUR DE CHAINE DE BLOCS AUPRÈS D'UN CONTRAT INTELLIGENT**

METHODE ZUR SELEKTIVEN AUTHENTIFIZIERUNG EINES NUTZERS EINER BLOCKCHAIN IM RAHMEN EINES SMART CONTRACT

METHOD FOR SELECTIVE AUTHENTICATION OF A USER OF A BLOCKCHAIN WITH AN INTELLIGENT CONTRACT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2019 FR 1909894**

(43) Date de publication de la demande:
**10.03.2021 Bulletin 2021/10**

(73) Titulaire: **Commissariat à l'Energie Atomique et aux Energies Alternatives**
**75015 Paris (FR)**

(72) Inventeurs:
• **HENNEBERT, Christine**
**38054 GRENOBLE CEDEX 9 (FR)**
• **DUVERNEY, Thomas**
**38054 GRENOBLE CEDEX 9 (FR)**

(74) Mandataire: **Brevalex**
**56, Boulevard de l'Embouchure**
**B.P. 27519**
**31075 Toulouse Cedex 2 (FR)**

(56) Documents cités:
• **ADRIANO DI LUZIO ET AL: "Arcula: A Secure Hierarchical Deterministic Wallet for Multi-asset Blockchains", ARXIV.ORG, CORNELL UNIVERSITY LIBRARY, 201 OLIN LIBRARY CORNELL UNIVERSITY ITHACA, NY 14853, 13 June 2019 (2019-06-13), XP081549181**
• **DANIELE FORNARO: "Elliptic Curve Hierarchical Deterministic Private Key Sequences: Bitcoin Standards and Best Practices", 19 April 2018 (2018-04-19), XP055688466, Retrieved from the Internet <URL:https://www.politesi.polimi.it/bitstream/10589/140112/1/2018_04_Fornaro.pdf> [retrieved on 20200422]**
• **"Mastering bitcoin : [unlocking digital cryptocurrencies]", 20 December 2014, O'REILLY MEDIA, Beijing Cambridge Farnham Köln Sebastopol Tokyo, ISBN: 978-1-4493-7404-4, article ANDREAS M. ANTONOPOULOS: "Mastering Bitcoin - Unlocking Digital Cryptocurrencies", XP055306939**

EP 3 789 901 B1

**Description**

**DOMAINE TECHNIQUE**

La présente invention concerne le domaine général des chaînes de blocs (*blockchains*) et plus particulièrement celui des contrats intelligents (*smart contracts*).

**ÉTAT DE LA TECHNIQUE ANTÉRIEURE**

Certaines chaînes de blocs permettent d'enregistrer des contrats intelligents, encore dénommés contrats autonomes ou *smart contracts.* Un exemple d'une telle chaîne de blocs est Ethereum. Un autre exemple d'une telle chaîne de blocs est Hyperledger.

On rappelle qu'un contrat intelligent est un programme qui est déployé (c'est-à-dire stocké) dans la chaîne de blocs et peut être exécuté par n'importe quel noeud du réseau. De manière générale, un contrat intelligent peut stocker des données, envoyer et recevoir des paiements, stocker un montant en cryptomonnaie (ether dans Ethereum), et exécuter des actions de manière autonome et décentralisée comme un agent logiciel. De manière générale, un contrat intelligent vérifie si un certain nombre de conditions d'entrée sont remplies et, dans l'affirmative, s'exécute automatiquement pour fournir un résultat codé dans le contrat.

Pour déclencher l'exécution d'un contrat intelligent, une transaction doit être émise depuis l'adresse de portefeuille (*wallet*) d'un utilisateur de la chaîne de blocs vers l'adresse du contrat intelligent. Selon la terminologie d'Ethereum, la transaction est émise par un EOA (*Externally Owned Account*) à destination d'un compte de contrat (*contract account*). On distingue en effet, les EOAs qui sont contrôlés par les utilisateurs au moyen d'applications de portefeuille, des comptes de contrats, qui sont contrôlés par des codes de logiciel autonomes (ou contrats intelligents) exécutés par la machine virtuelle Ethereum ou EVM (*Ethereum Virtual Machine*). Les comptes de portefeuilles (EOAs), à la différence des comptes de contrat ne disposent pas de capacité de stockage ni de ressources d'exécution de code propres.

Chaque compte d'utilisateur est associé à un couple de clé publique-clé privée d'un cryptosystème asymétrique, généralement un cryptosystème sur courbe elliptique, l'adresse du compte de l'utilisateur étant obtenue par hachage de la clé publique en question. La clé privée est en revanche connue de l'utilisateur seul.

Lorsque l'utilisateur veut transmettre une transaction à la chaîne de blocs à partir de son compte, il la signe avec sa clé privée, par exemple au moyen de l'algorithme ECDSA (*Elliptic Curve Digital Signature Algorithm*). Chacun peut alors vérifier que la transaction a bien été signée par le titulaire du compte. En particulier, lorsqu'un contrat intelligent reçoit une transaction, celui-ci peut vérifier à partir de l'adresse du compte de l'utilisateur ayant émis la transaction que celle-ci a bien été signée par le titulaire du compte. Ce mécanisme d'authentification est systématique et préalable à la vérification des conditions d'exécution du contrat intelligent.

On distingue généralement deux types de contrats intelligents : les contrats intelligents d'enregistrement de données et ceux d'utilisation de jetons (*tokens*).

Un contrat intelligent d'enregistrement de données permet d'enregistrer dans le registre distribué de la chaîne de blocs des données ou bien des empreintes de données. Un tel contrat intelligent est déployé sur le registre distribué et est donc adressable et accessible par tous les utilisateurs de la chaîne de blocs.

Même si l'adresse du compte d'utilisateur ne permet pas de remonter directement à l'identité de ce dernier, il n'en demeure pas moins que ses transactions sont auditables et traçables en raison du caractère public du registre distribué. Ainsi, il est possible de corréler des transactions émises à destination de contrats intelligents différents, ce qui peut trahir son identité. L'utilisateur peut ainsi souhaiter qu'un auditeur externe ne réussisse à établir de lien entre des transactions dont il est à l'origine et à destination de contrats distincts.

Un second type de contrat intelligent utilise des jetons (*tokens*) encore dénommés cryptoactifs. Un jeton se distingue d'une cryptodevise (telles que l'ether ou le bitcoin par exemple) associée à une chaîne de blocs au sens où il n'est pas reconnu par le protocole gérant la chaîne de blocs. Les jetons sont en effet générés exclusivement par des contrats intelligents qui sont aussi en charge des opérations portant sur leur propriété, les transferts et les droits d'accès. Les cryptoactifs ont récemment connu un grand succès en tant que support de levées de fonds en ICO (*Initial Coin Offering*).

Les contrats intelligents utilisant des jetons, comme ceux gérant l'enregistrement de données, sont auditables par nature de la chaîne de blocs. En particulier, dès lors que l'on connaît l'adresse d'un contrat intelligent, il est possible de le consulter pour connaître le solde en jetons de chaque titulaire. On peut alors rapprocher des opérations effectuées par un même titulaire et suivre son activité en surveillant les mouvements de ses cryptoactifs d'un contrat intelligent à l'autre.

Afin de protéger la confidentialité des opérations qu'il effectue sur la chaîne de blocs en faisant appel à des contrats intelligents, un utilisateur peut recourir à différents comptes (et donc à différentes adresses), chaque compte étant associé de manière unique à un couple de clé privée -clé publique. L'ensemble des clés privées associées aux adresses de compte est conservé dans un portefeuille de clés propre à l'utilisateur.

De manière générale, on distingue les portefeuilles non déterministes (ou aléatoires) des portefeuilles déterministes.

Dans un portefeuille non déterministe, aussi connu sous l'acronyme JBOK (Just a Bunch Of Keys), les clés sont générées de manière aléatoire. Ce type de portefeuille n'est pas structuré et sa gestion est donc complexe. En outre, la maintenance du portefeuille implique d'effectuer des opérations de sauvegarde relativement lourdes. Enfin, en cas de perte du portefeuille, l'utilisateur n'aura plus accès à ses cryptoactifs.

Pour remédier à ces difficultés, on a généralement recours à des portefeuilles hiérarchiques déterministes dans lesquels toutes les clés privées sont générées, de manière arborescente, à partir d'un même germe. Autrement dit, la connaissance du germe permet de retrouver l'ensemble des clés privées du portefeuille. On trouvera une description de la structure des portefeuilles déterministes dans l'ouvrage de A.M. Antonoupulos et al. intitulé « Mastering Ethereum » pages 79-97. En outre, le document "Arcula: A Secure Hierarchical Deterministic Wallet for Multi-asset Blockchains", A. DI LUZIO et al., arxiv.org, Cornell University Library, NY 14853, 13 juin 2019, divulgue une méthode de création d'un portefeuille hiérarchique déterministe (HDW) qui permet de générer des adresses d'utilisateur pour une chaine de blocs.

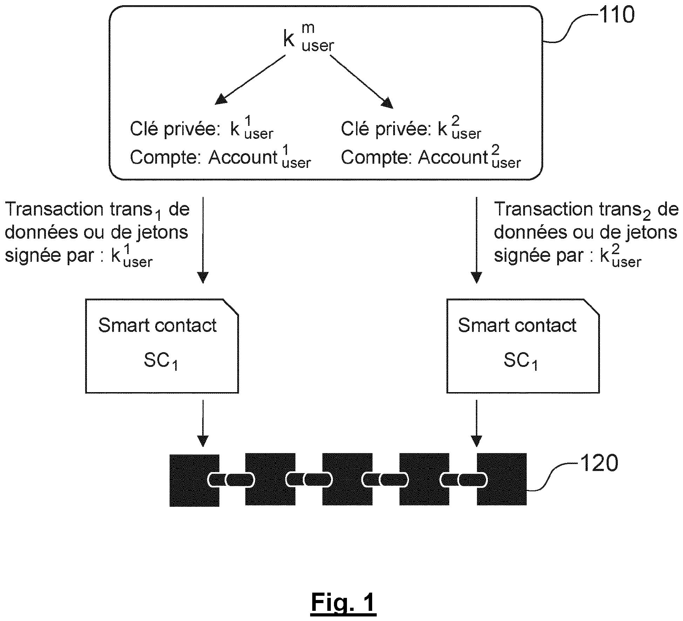

La Fig. 1 représente de manière schématique l'interaction d'un utilisateur équipé d'un portefeuille hiérarchique déterministe avec deux contrats intelligents, déployés sur une chaîne de blocs.

L'utilisateur est ici titulaire d'un portefeuille de clés 110 contenant une première clé privée, $k_{user}^1$, et une seconde clé privée, $k_{user}^2$, dérivées de manière déterministe d'une clé privée maîtresse, $k_{user}^m$. Les clés publiques correspondantes dans un cryptosystème asymétrique sont notées $PK_{user}^1$, $PK_{user}^2$. Par exemple, dans le cas d'un cryptosystème sur courbe elliptique, elles sont obtenues par $PK_{user}^1 = k_{user}^1 . G$ et $PK_{user}^2 = k_{user}^2 . G$ où G est le point générateur de la courbe elliptique. Les adresses des comptes d'utilisateur, à partir de laquelle, l'utilisateur pourra émettre des transactions vers une chaîne de blocs, sont obtenues à partir des clés publiques au moyen d'une fonction de hachage ou d'une combinaison de fonctions de hachage, soit :

$$account_{user}^i = Hash\left(PK_{user}^i\right) \, , \, i = 1, 2 \tag{1}$$

où *Hash* correspond à une fonction de hachage ou une combinaison de fonctions de hachage.

L'utilisateur peut alors transmettre, à partir de son adresse de compte $account_{user}^1$, une transaction *trans*$_1$ signée au moyen de la clé privée $k_{user}^1$, à destination du contrat intelligent *SC*$_1$ déployé sur la chaîne de blocs 120. De la même façon, il peut transmettre, à partir de son adresse de compte $account_{user}^2$ une transaction *trans*$_2$ signée au moyen de la clé privée $k_{user}^2$, à destination du contrat intelligent *SC*$_2$. Un utilisateur tiers ne pourra donc corréler les origines des deux transactions.

Les transactions peuvent comprendre des données (ou des empreintes de données) à enregistrer lorsque les contrats sont du premier type ou bien des instructions relatives à des jetons lorsque les contrats sont du second type.

Dans tous les cas, même en disposant d'un portefeuille hiérarchique déterministe, un utilisateur devra conserver en mémoire et maintenir un tableau donnant les relations entre les adresses de compte et les contrats intelligents pour pouvoir s'authentifier de ces derniers.

L'objet de la présente invention est par conséquent de proposer une méthode d'authentification permettant à un utilisateur de s'authentifier auprès de contrats intelligents déployés sur une chaîne de blocs sans avoir à gérer la complexité d'un portefeuille de clés et sans compromettre la confidentialité des opérations qu'il réalise au moyen de ces contrats.

**EXPOSÉ DE L'INVENTION**

La présente invention est définie par une méthode d'authentification d'un utilisateur d'une chaîne de blocs auprès d'un contrat intelligent déployé sur ladite chaîne de blocs, l'utilisateur disposant d'un portefeuille hiérarchique déterministe de génération de clés privées, organisé selon une structure arborescente, l'utilisateur transmettant une transaction à destination du contrat intelligent, ladite méthode étant spécifique en ce que :

- le portefeuille hiérarchique déterministe comporte un chemin au sein de la structure arborescente, entre une clé privée maîtresse de l'utilisateur, à la racine de la structure arborescente, et une clé privée spécifique au dit contrat intelligent, l'utilisateur disposant d'une adresse de compte émetteur obtenue par hachage d'une clé publique correspondant à ladite clé privée spécifique dans un cryptosystème asymétrique, ledit chemin empruntant une pluralité d'embranchements au sein de la structure arborescente, chaque embranchement portant un indice, le contrat intelligent étant identifié de manière univoque par un ou des indices des embranchements empruntés par ledit chemin;
- l'utilisateur génère une transaction et la signe au moyen de la clé privée spécifique avant de la transmettre à destination du contrat intelligent;
- le contrat intelligent, après réception de la transaction, vérifie la validité de la signature à partir de l'adresse de compte émetteur et si la transaction a bien été émise par l'adresse de compte émetteur.

Avantageusement, un ou plusieurs indices d'embranchements dudit chemin sont donnés par le nom du contrat intelligent et/ou le symbole définissant ce contrat et/ou l'adresse de ce contrat sur la chaîne de blocs.

Le portefeuille hiérarchique déterministe est de préférence conforme à la structure de BIP-32.

Selon un exemple de réalisation un embranchement dudit chemin a pour indice le symbole définissant le contrat.

Selon un autre exemple de réalisation, l'adresse du contrat sur la chaîne de blocs est représentée par une pluralité d'octets et une séquence d'embranchements dudit chemin ont pour indices respectifs les octets de ladite pluralité.

Dans ce cas, le dernier embranchement de la séquence d'embranchements conduit à une feuille de l'arborescence, la clé privée spécifique étant générée au niveau de cette feuille.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1, déjà décrite, représente de manière schématique l'interaction d'un utilisateur équipé d'un portefeuille hiérarchique déterministe avec deux contrats intelligents déployés sur une chaîne de blocs ;
La Fig. 2 représente de manière schématique la structure d'un portefeuille hiérarchique déterministe ;
Les Figs. 3A et 3B représentent respectivement une première et une seconde méthode de génération de clés privées dans un portefeuille hiérarchique déterministe ;
La Fig. 4 représente de manière schématique l'interaction d'un utilisateur équipé d'un portefeuille hiérarchique déterministe avec un contrat intelligent, selon un mode de réalisation de l'invention.

## EXPOSÉ DÉTAILLÉ DE MODES DE RÉALISATION PARTICULIERS

Nous considérerons dans la suite l'interaction d'un utilisateur d'une chaîne de blocs (telle qu'Ethereum par exemple) avec un contrat intelligent déployé sur cette chaîne.

On suppose que l'utilisateur dispose d'un portefeuille de clés hiérarchique déterministe.

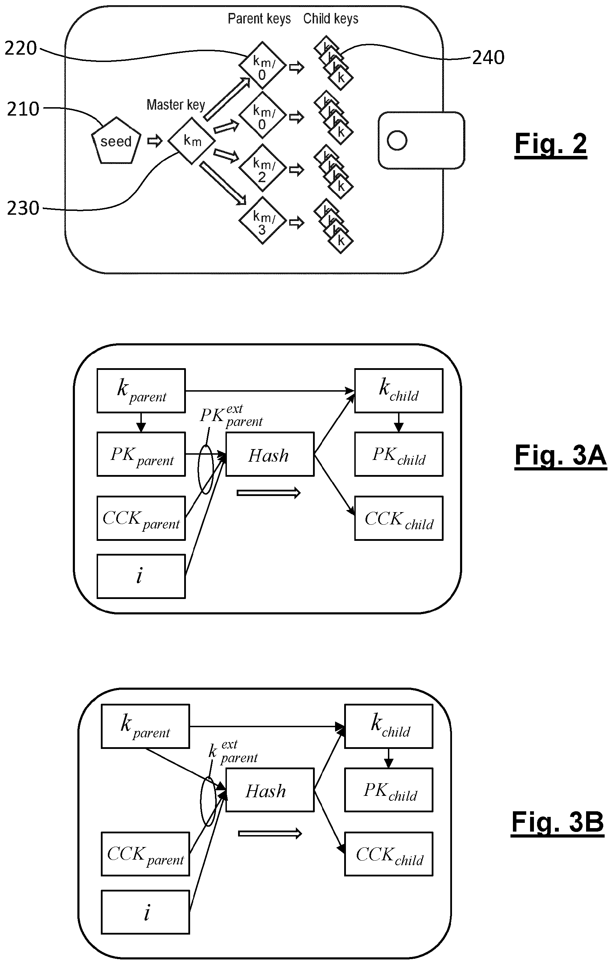

La Fig. 2 représente de manière schématique la structure d'un tel portefeuille hiérarchique déterministe.

Le germe, 210, à l'origine du portefeuille de clés est un nombre aléatoire (ou entropie), par exemple sur 128 ou 256 bits. Il est généralement représenté par un code mnémonique constitué de 12 ou 24 mots tirés d'un dictionnaire prédéterminé comportant un nombre de mots prédéterminé (2048).

Le germe est ensuite haché (par exemple au moyen la fonction de hachage HMAC-SHA 512), pour fournir d'une part une clé privée maîtresse, 220, ($k_m$) et un code de chaîne associé (non représenté).

La clé publique maîtresse est ensuite calculée à partir de la clé privée maîtresse au moyen de $PK_m = k_m.G$ où $G$ est le point générateur de la courbe elliptique.

A chaque génération, on obtient à partir d'une clé privée parent, 230, du code de chaîne associée à cette clé et d'un numéro d'index, $i$, une clé privée enfant, 240, de rang de naissance $i+1$ (le premier enfant correspondant à l'indice nul). La génération de la clé privée fait intervenir une fonction de hachage (ou une combinaison de fonctions de hachage) interdisant de pouvoir remonter à une clé privée parent à partir de la clé privée d'un enfant.

La génération des clés privées dans un portefeuille hiérarchique déterministe peut être réalisée selon différentes méthodes.

La Fig. 3A représente une première méthode de génération de clés privées dans un portefeuille hiérarchique déterministe.

On a représenté à gauche de la figure les éléments relatifs à une clé privée parent et à droite ceux relatifs à une clé privée enfant, issue de cette clé privée parent.

La clé privée parent, $k_{parent}$, permet tout d'abord de générer la clé publique correspondante du cryptosystème asymétrique, par exemple $PK_{parent} = k_{parent}G$ dans le cas d'un cryptosystème sur courbe elliptique.

La clé publique parent $PK_{parent}$ est concaténée à la chaîne de code, $CCK_{parent}$, associée pour former une clé publique étendue $PK_{parent}^{ext} = PK_{parent} \big| CCK_{parent}$. Cette clé publique étendue est combinée avec l'index, $i$, de la clé enfant que l'on souhaite générer, puis l'ensemble est haché au moyen d'une fonction de hachage, *Hash*.

Le résultat du hachage est divisé en une partie gauche et une partie droite. La partie gauche est combinée avec la clé privée parent, $k_{parent}$, pour donner la clé privée enfant, $k_{child}$ tandis que la partie droite donne la chaîne de code associée à la clé enfant, soit $CCK_{child}$. La clé privée enfant, $k_{child}$, permet de générer la clé publique enfant, $PK_{child} = k_{child}G$.

On dispose par conséquent des éléments $k_{child}$, $PK_{child}$, $CCK_{child}$ permettant d'itérer une nouvelle fois la génération de clés privées.

L'opération de génération permettant de passer d'une clé privée parent à une clé enfant d'indice $i$ est notée ici $CKD_{priv}^{n}$. Autrement dit :

$$k_{child} = CKD_{priv}^{n}\left(k_{parent}, i\right) \tag{2}$$

et donc, par récurrence :

$$k_{child} = CKD_{priv}^{n}\left(...CKD_{priv}^{n}\left(CKD_{priv}^{n}\left(k_m, i_1\right), i_2\right), ..., i_N\right) \tag{3}$$

où $N$ est la longueur du chemin dans l'arborescence à compter du germe, et où $i_1, ..., i_N$ est la succession des indices des clés enfants le long du chemin.

La Fig. 3B représente une seconde méthode de génération de clés privées dans un portefeuille hiérarchique déterministe.

Cette méthode de génération, dite renforcée (*hardened*), par opposition à la méthode précédente, dite normale, utilise une clé privée étendue au lieu d'une clé publique étendue pour générer une clé privée de la génération suivante. Elle est *a priori* plus robuste que la méthode normale puisqu'elle omet du calcul une information publique.

Comme précédemment, on a représenté à gauche de la figure les éléments relatifs à une clé privée parent et à droite ceux relatifs à une clé privée enfant, issue de cette clé privée parent.

La clé privée parent, $k_{parent}$, est concaténée avec la chaîne de code associée pour former une clé privée étendue $k_{parent}^{ext} = k_{parent} \big| CCk_{parent}$.

Cette clé privée étendue est combinée avec l'indice, $i$, de la clé enfant que l'on souhaite générer, puis l'ensemble est haché au moyen d'une fonction de hachage, *Hash*.

Le résultat du hachage est divisé en une partie gauche et une partie droite. La partie gauche est combinée comme précédemment avec la clé privée parent, $k_{parent}$, pour donner la clé privée enfant, $k_{child}$ tandis que la partie droite donne la chaîne de code associée à la clé enfant, soit $CCk_{child}$. La clé privée enfant, $k_{child}$, permet à son tour de générer la clé publique enfant, $PK_{child} = k_{child}G$.

L'opération de génération permettant de passer d'une clé privée parent à une clé enfant d'indice $i$ est appelée opération de génération renforcée et notée $CKD_{priv}^{h}$ Autrement dit :

$$k_{child} = CKD_{priv}^{h}\left(k_{parent}, i\right) \tag{4}$$

Si l'on n'utilise que des opérations de génération renforcée, on obtient par récurrence :

$$k_{child} = CKD_{priv}^{h}\left(...CKD_{priv}^{h}\left(CKD_{priv}^{h}\left(k_m, i_1\right), i_2\right), ..., i_N\right) \tag{5}$$

où, comme précédemment $N$ est la longueur du chemin dans l'arborescence à compter du germe, et où $i_1, ..., i_N$ est la succession des indices des clés enfants le long du chemin.

On notera que la génération d'une clé privée du portefeuille peut faire intervenir successivement des opérations de génération normale et des opérations de génération renforcée le long du chemin. Ainsi, plus généralement, cette clé privée sera obtenue par :

$$k_{child} = CKD_{priv}\left(...CKD_{priv}\left(CKD_{priv}\left(k_m, i_1\right), i_2\right)\right), ..., i_N\right) \tag{6}$$

où chaque opération de génération élémentaire $CKD_{priv}$ peut être une opération de génération normale $CKD_{priv}^n$ ou une opération de génération renforcée $CKD_{priv}^h$.

De manière pratique, les indices $i$ utilisés dans les opérations de génération normale et les opérations de génération renforcée prennent leurs valeurs dans des intervalles distincts. Ainsi, les indices allant de 0 à $2^{31}-1$ sont utilisés pour générer des clés privées selon une opération de génération normale et les indices allant de $2^{31}$ à $2^{32}-1$ sont utilisés pour générer des clés privées selon une opération de génération renforcée.

Dans tous les cas, une clé privée pourra être identifiée au moyen d'un chemin de génération dans l'arborescence à partir de la clé privée maîtresse. Ainsi, par exemple, $m/0/3$ désignera la clé privée de seconde génération, 4ème enfant normal de la clé parent, elle-même premier enfant normal de la clé privée maîtresse. De même, $m/0/3'$ désignera la clé privée de seconde génération, 4ème enfant renforcé de la clé parent, elle-même premier enfant normal de la clé privée maîtresse, où l'on prend pour convention $i' = i + 2^{31}$.

L'idée à la base de la présente invention est de prévoir pour chaque contrat intelligent, $SC$ avec lequel l'utilisateur doit interagir une clé privée spécifique, $k_{user}^{SC}$, ladite clé privée spécifique étant identifiée par un chemin de génération au sein de la structure arborescente, au moins un noeud de ce chemin étant indexé par un identifiant du contrat intelligent. L'adresse du compte de l'utilisateur à partir de laquelle l'utilisateur envoie les transactions à destination du contrat intelligent est obtenue par hachage de la clé publique associée à la clé privée spécifique dans le cryptosystème asymétrique.

Avec les conventions précédentes :

$$k_{user}^{SC} = CKD_{priv}\left(...CKD_{priv}\left(CKD_{priv}\left(k_{user}^m, i_1\right), i_2\right)\right), ..., i_N\right) \tag{7}$$

où au moins l'un des indices $i_1,...,i_N$ est un identifiant du contrat intelligent SC et $k_{user}^m$ est la clé privée maîtresse de l'utilisateur. Dans un cryptosystème sur courbe elliptique, la clé publique correspondant à la clé privée spécifique est $PK_{user}^{SC} = k_{user}^{SC}.G$ et l'adresse de compte de l'utilisateur dédiée pour interagir avec le contrat intelligent est donnée par :

$$account_{user}^{SC} = Hash\left(PK_{user}^{SC}\right) \tag{8}$$

Le chemin de génération de clés au sein de la structure arborescente du portefeuille est donné par une succession d'embranchements, selon des indices formant un chemin depuis la racine $m$ d'un arbre jusqu'à la feuille identifiée par le dernier indice :

$$m / ... / Id_{SC} / ... \tag{9}$$

où $Id_{SC}$ est un indice identifiant de manière univoque le contrat intelligent $SC$.

Autrement dit, le portefeuille a une structure d'arbre (au sens de la théorie des graphes), les arcs sortants d'un noeud parent ou, de manière équivalente, les noeuds-fils étant indexés par les indices précités. Ainsi la succession d'indices (9) définit un chemin entre la racine et une feuille de l'arbre.

Le contrat intelligent est écrit dans un langage informatique (tel que Solidity par exemple). Il comprend un « constructeur », c'est-à-dire une fonction qui n'est exécutée qu'une fois et initialise l'état du contrat. Lorsque cette fonction est appelée, elle effectue une initialisation le contrat, par exemple en attribuant un certain nombre de jetons au compte à partir duquel il a été déployé sur la chaîne de blocs. Le constructeur peut également attribuer un symbole au contrat intelligent (qui peut être un symbole en 3 lettres identifiant le jeton objet du contrat).

Le contrat possède également un nom qui n'est pas nécessairement celui du constructeur.

Enfin une fois déployé sur la chaîne de blocs, le contrat intelligent est associé à une adresse unique (représentée sur 20 octets) à laquelle il est stocké et qui permet de l'adresser.

L'identifiant du contrat intelligent peut résulter de la sélection ou de la combinaison des éléments précités : nom du contrat, symbole définissant le contrat, adresse du contrat. En tout état de cause, l'identifiant doit être unique et propre au contrat intelligent en question de sorte que deux contrats intelligents quelconques déployés sur la chaîne de blocs sont associés à des identifiants distincts.

Si le portefeuille hiérarchique déterministe (HD) est au format BIP-32, l'indice de chaque noeud doit être compris entre 0 et $2^{31}-1$, le MSB étant utilisé pour distinguer une génération normale d'une génération renforcée. Autrement dit, chaque indice peut être représenté sur 4 octets.

Dans ce cas, on pourra par exemple prendre pour identifiant du contrat intelligent le symbole $symbol_{SC}$ (sur 3 octets) qui le définit, le chemin de génération de la clé privée spécifique étant alors de la forme :

$$m \, / \ldots / \, symbol_{SC} \qquad\qquad (10)$$

Dans cet exemple, le chemin commence à la racine de l'arbre, se poursuit par une suite d'indices représentant des embranchements (ou noeuds) successifs et se termine par le symbole $symbol_{SC}$ représentant une feuille de la structure arborescente du portefeuille hiérarchique.

Alternativement, toujours en supposant que le portefeuille HD est au format BIP-32, on pourra utiliser l'adresse du contrat en la scindant en plusieurs indices de 4 octets chacun. Plus précisément, si l'on note $add_{SC}^0, \ldots, add_{SC}^{19}$ les 20 octets (de poids croissant) de l'adresse du contrat intelligent, le chemin de génération de la clé privée spécifique pourra être de la forme :

$$m \, / \ldots / \, add_{SC}^{19} \ldots add_{SC}^{16} \, / \, add_{SC}^{15} \ldots add_{SC}^{12} \, / \, add_{SC}^{11} \ldots add_{SC}^{8} \, / \, add_{SC}^{7} \ldots add_{SC}^{4} \, / \, add_{SC}^{3} \ldots add_{SC}^{0}$$

$$(11)$$

Autrement dit, avec les conventions de notation de l'expression (7), l'indice $i_N$ est formé par la concaténation des octets $add_{SC}^3 \ldots add_{SC}^0$, l'indice $i_{N-1}$ est formé par la concaténation des octets $add_{SC}^7 \ldots add_{SC}^4$, etc. Les indices $i_{N-3}$, à $i_N$ des différents embranchements dans l'arborescence identifient de manière univoque le contrat intelligent $SC$. Dans cet exemple, l'embranchement ayant pour indice $i_N$ conduit à une feuille de la structure arborescente.

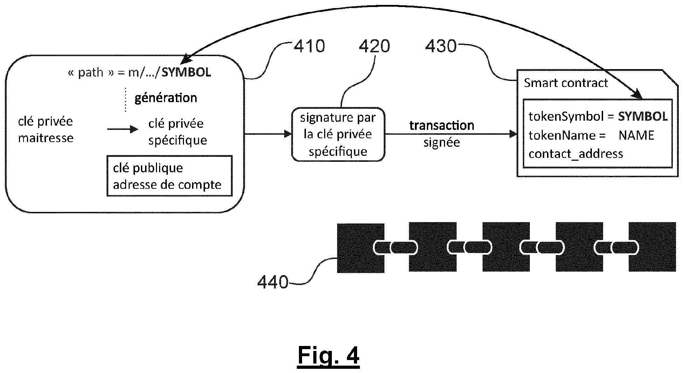

Lorsque l'utilisateur souhaite interagir avec le contrat intelligent, il lui transmet une transaction comme indiqué schématiquement en Fig. 4.

On a représenté en 410 le portefeuille HD de clés privées de l'utilisateur. La clé privée spécifique au contrat intelligent, 430, $SC$ est générée au moyen d'un chemin dans la structure arborescente du portefeuille, ledit chemin étant identifié par une succession d'indices d'embranchement dans la structure arborescente du portefeuille hiérarchique.

Dans le cas illustré, le chemin se termine par une feuille portant l'indice SYMBOL identifiant le contrat intelligent de manière univoque.

La transaction est signée en 420 au moyen de ladite clé privée spécifique. Plus précisément la transaction est hachée au moyen d'une fonction de hachage (ou d'une combinaison de telles fonctions) puis la signature ECDSA est ensuite calculée (composantes $r, s$ voire $(r,s,v)$ où $v$ identifie la chaîne (par exemple Ethereum).

La transaction est émise à partir de l'adresse publique EOA (*Externally Owned Account*), obtenue par hachage de la clé publique correspondant à ladite clé privée spécifique dans le cryptosystème asymétrique. La transaction est ensuite propagée sur le réseau P2P de la chaîne de blocs, 440.

A la réception, le contrat intelligent $SC$ vérifie à partir de la signature si la transaction a bien été émise par l'adresse publique EOA. Plus précisément, le contrat intelligent peut déduire des composantes de la signature et de l'adresse de compte de l'émetteur (cette adresse étant obtenue par hachage de la clé publique de l'utilisateur) ayant émis la transaction, si cette dernière a bien été signée par la clé privée spécifique. Le contrat intelligent authentifie ainsi l'émetteur. Il est à noter que cette authentification peut être d'ailleurs réalisée par n'importe quel noeud de la chaîne de blocs. Après avoir authentifié l'émetteur et s'être assuré que les différents arguments d'entrée remplissaient bien les conditions spécifiées dans le contrat, le contrat intelligent exécute la fonction appelée (encore dénommée méthode).

La transaction émise par l'adresse de compte émetteur de l'utilisateur peut se présenter sous la forme générale suivante :

$$Transaction : \{$$

$$'from' : @account\_issuer$$

$$'to' : @smart\_contract\_address$$

$$'data' : IDmethod \& arguments$$

$$\}$$

$$signée\ par\ private\_key\_issuer$$

dans laquelle :

- @account_issuer représente l'adresse de compte de l'émetteur (EOA) à partir de laquelle la transaction est émise. Cette adresse publique est obtenue par hachage de la clé publique correspondant à la clé privée spécifique, comme expliqué plus haut ;
- @smart_contract_address représente l'adresse du contrat intelligent déployé sur la chaîne de blocs ;
- IDmethod & arguments représentent respectivement la fonction (la méthode) du contrat intelligent appelée par la transaction et les arguments en entrée ;
- private_key_issuer désigne la clé privée spécifique.

## Revendications

1. Méthode d'authentification d'un utilisateur d'une chaîne de blocs auprès d'un contrat intelligent déployé sur ladite chaîne de blocs, l'utilisateur disposant d'un portefeuille hiérarchique déterministe de génération de clés privées, organisé selon une structure arborescente, l'utilisateur transmettant une transaction à destination du contrat intelligent, la méthode comportant:

   - le portefeuille hiérarchique déterministe comporte un chemin au sein de la structure arborescente, entre une clé privée maîtresse de l'utilisateur, à la racine de la structure arborescente, et une clé privée spécifique au dit contrat intelligent, l'utilisateur disposant d'une adresse de compte émetteur obtenue par hachage d'une clé publique correspondant à ladite clé privée spécifique dans un cryptosystème asymétrique, ledit chemin empruntant une pluralité d' embranchements au sein de la structure arborescente, chaque embranchement portant un indice, le contrat intelligent étant identifié de manière univoque par un ou des indices des embranchements empruntés par ledit chemin;
   - l'utilisateur génère une transaction et la signe au moyen de la clé privée spécifique avant de la transmettre à destination du contrat intelligent;
   - le contrat intelligent, après réception de la transaction, vérifie la validité de la signature à partir de l'adresse de compte émetteur et si la transaction a bien été émise par l'adresse de compte émetteur.

2. Méthode d'authentification selon la revendication 1, **caractérisée en ce qu'**un ou plusieurs indices d'embranchements dudit chemin sont donnés par le nom du contrat intelligent et/ou le symbole définissant ce contrat et/ou l'adresse de ce contrat sur la chaîne de blocs.

3. Méthode d'authentification selon la revendication 2, **caractérisée en ce que** le portefeuille hiérarchique déterministe est conforme à la structure de BIP-32.

4. Méthode d'authentification selon la revendication 3, **caractérisée en ce qu'**un embranchement dudit chemin a pour indice le symbole définissant le contrat.

5. Méthode d'authentification selon la revendication 3, **caractérisée en ce que** l'adresse du contrat sur la chaîne de blocs est représentée par une pluralité d'octets et qu'une séquence d'embranchements dudit chemin ont pour indices respectifs les octets de ladite pluralité.

**EP 3 789 901 B1**

**6.** Méthode d'authentification selon la revendication 5, **caractérisée en ce que** le dernier embranchement de la séquence d'embranchements conduit à une feuille de l'arborescence, la clé privée spécifique étant générée au niveau de cette feuille.

**Patentansprüche**

**1.** Verfahren zum Authentifizieren eines Benutzers einer Blockchain bei einem Smart Contract, der in der Blockchain eingesetzt wird, wobei der Benutzer ein hierarchisches deterministisches Wallet zum Generieren privater Schlüssel besitzt, das in einer Baumstruktur organisiert ist, wobei der Benutzer eine Transaktion an den Smart Contract übermittelt, wobei das Verfahren Folgendes enthält:

- das hierarchische deterministische Wallet enthält einen Pfad innerhalb der Baumstruktur zwischen einem privaten Hauptschlüssel des Benutzers an der Wurzel der Baumstruktur und einem privaten Schlüssel, der für den Smart Contract spezifisch ist, wobei der Benutzer eine ausstellende Kontoadresse besitzt, die durch Hashing eines öffentlichen Schlüssels erhalten wird, der dem spezifischen privaten Schlüssel in einem asymmetrischen Kryptosystem entspricht, wobei der Pfad eine Vielzahl von Verzweigungen innerhalb der Baumstruktur verwendet, wobei jede Verzweigung einen Index trägt, wobei der Smart Contract durch einen oder mehrere Indizes von Verzweigungen, denen der Pfad folgt, eindeutig identifiziert wird;
- der Benutzer generiert eine Transaktion und signiert sie mit dem spezifischen privaten Schlüssel, bevor er sie an den Smart Contract übermittelt;
- der Smart Contract überprüft nach dem Empfangen der Transaktion die Gültigkeit der Signatur der ausstellenden Kontoadresse und ob die Transaktion tatsächlich von der ausstellenden Kontoadresse ausgestellt wurde.

**2.** Authentifizierungsverfahren nach Anspruch 1, **dadurch gekennzeichnet, dass** ein oder mehrere Indizes von Verzweigungen des Pfads durch den Namen des Smart Contracts und/oder das diesen Vertrag definierende Symbol und/oder die Adresse dieses Vertrags in der Blockchain gegeben sind.

**3.** Authentifizierungsverfahren nach Anspruch 2, **dadurch gekennzeichnet, dass** das hierarchische deterministische Wallet mit der BIP-32-Struktur konform ist.

**4.** Authentifizierungsverfahren nach Anspruch 3, **dadurch gekennzeichnet, dass** eine Verzweigung des Pfads als Index das Symbol hat, das den Vertrag definiert.

**5.** Authentifizierungsverfahren nach Anspruch 3, **dadurch gekennzeichnet, dass** die Vertragsadresse in der Blockchain durch eine Vielzahl von Bytes dargestellt wird und dass eine Folge von Verzweigungen des Pfads als jeweilige Indizes die Bytes der Vielzahl haben.

**6.** Authentifizierungsverfahren nach Anspruch 5, **dadurch gekennzeichnet, dass** die letzte Verzweigung der Folge von Verzweigungen zu einem Blatt der Baumstruktur führt, wobei der spezifische private Schlüssel an diesem Blatt generiert wird.

**Claims**

**1.** A method for authenticating a user of a blockchain with a smart contract deployed on said blockchain, the user having a deterministic hierarchical wallet for generating private keys, organised according to a tree structure, the user transmitting a transaction to the smart contract, the method including:

- the deterministic hierarchical wallet includes a path within the tree structure, between a master private key of the user, at the root of the tree structure, and a private key specific to said smart contract, the user having an emitter account address obtained by hashing a public key corresponding to said specific private key in an asymmetric cryptosystem, said path taking a plurality of branches within the tree structure, each branch carrying an index, the smart contract being unequivocally identified by one or more indices of the branches taken by said path;
- the user generates a transaction and signs it using the specific private key before transmitting it to the smart contract;
- the smart contract, after receiving the transaction, verifies the validity of the signature from the emitter account address and whether the transaction was indeed emitted by the emitter account address.

2. The authentication method according to claim 1, **characterised in that** one or more branching indices of said path are given by the name of the smart contract and/or the symbol defining this contract and/or the address of this contract on the blockchain.

3. The authentication method according to claim 2, **characterised in that** the deterministic hierarchical wallet conforms to the structure of BIP-32.

4. The authentication method according to claim 3, **characterised in that** a branch of said path has as an index the symbol defining the contract.

5. The authentication method according to claim 3, **characterised in that** the address of the contract on the blockchain is represented by a plurality of bytes and that a sequence of branches of said path have as respective indices the bytes of said plurality.

6. The authentication method according to claim 5, **characterised in that** the last branch of the sequence of branches leads to a leaf of the tree structure, the specific private key being generated at this leaf.

$$k_{user}^{m}$$

Clé privée: $k_{user}^{1}$          Clé privée: $k_{user}^{2}$

Compte: $Account_{user}^{1}$          Compte: $Account_{user}^{2}$

⌐110

Transaction $trans_1$ de
données ou de jetons
signée par : $k_{user}^{1}$

Transaction $trans_2$ de
données ou de jetons
signée par : $k_{user}^{2}$

Smart contact
$SC_1$

Smart contact
$SC_1$

⌐120

## Fig. 1

Fig. 2

Fig. 3A

Fig. 3B

« path » = m/.../**SYMBOL**

génération

clé privée          clé privée
maitresse           spécifique

clé publique
adresse de compte

~410    420    430~

signature par
la clé privée
spécifique

transaction
signée

Smart contract

tokenSymbol = **SYMBOL**
tokenName =   NAME
contact_address

440~

# Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.M. ANTONOUPULOS et al.** *Mastering Ethereum,* vol. 79-97

- Arcula: A Secure Hierarchical Deterministic Wallet for Multi-asset Blockchains. **A. DI LUZIO et al.** arxiv.org. Cornell University Library, 13 Juin 2019